# FASCICULE DE BREVET EUROPEEN

(11) **EP 2 836 681 B1**
(45) Date de publication et mention de la délivrance du brevet: **16.03.2016**
(21) Numéro de dépôt: 13719998.0
(22) Date de dépôt: 12.04.2013
(51) Int. Cl.: F16D 1/02, F16D 1/10

(54) **ACCOUPLEMENT D'ARBRES PAR CANNELURES A PROFIL EVOLUTIF**
KEILWELLENVERZAHNUNG KUPPLUNG MIT EVOLUTIVE PROFILE
SHAFT COUPLING WITH EVOLUTIVE PROFILE SPLINE

(30) Priorité: 13.04.2012 FR 1253432
(43) Date de publication de la demande: 18.02.2015
(73) Titulaire: Snecma, 75015 Paris (FR)
(72) Inventeur: BOIS, Stéphane, F-77550 Moissy-Cramayel (FR); PATIN, Guillaume, F-77550 Moissy-Cramayel (FR)
(74) Mandataire: Regimbeau
(86) Numéro de dépôt international: PCT/FR2013/050795
(87) Numéro de publication internationale: WO 2013/153339

(56) Documents cités:
- EP-A1- 1 533 534
- WO-A1-2008/099689
- DE-A1- 19 929 639
- DE-A1-102007 004 212
- FR-A1- 2 918 726
- US-A- 3 638 455

## Description

### DOMAINE DE L'INVENTION

L'invention concerne les dispositifs d'accouplement d'arbres, comme des dispositifs d'accouplement entre un arbre de turbine et un arbre de compresseur.

Elle est notamment applicable aux dispositifs d'accouplement d'arbres de turbine et de compresseur de turbomachines assurant la propulsion d'engins aéronautiques.

### ETAT DE LA TECHNIQUE

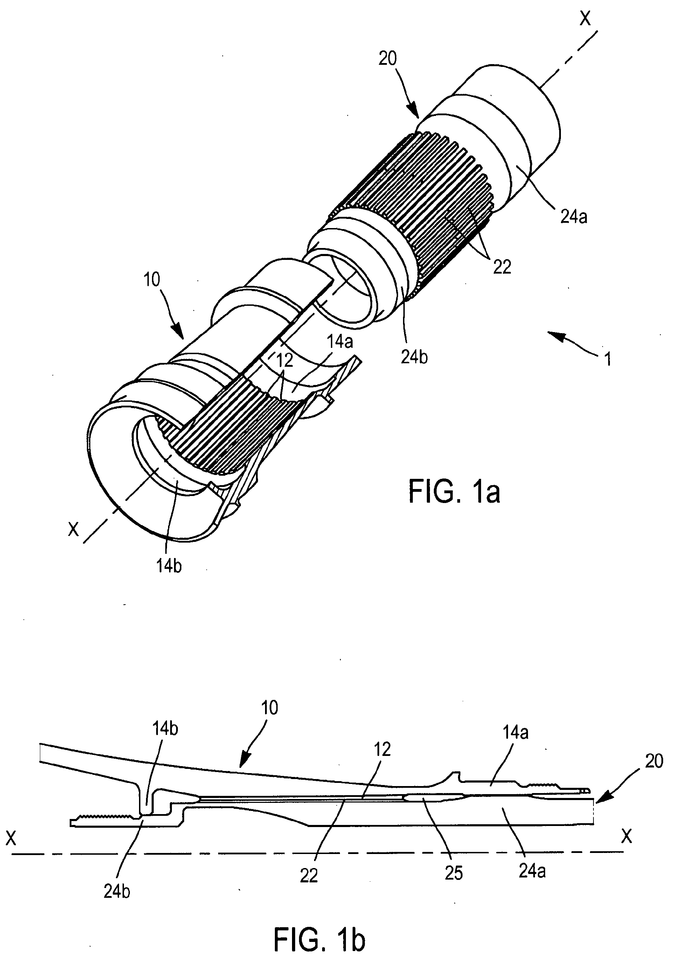

Les arbres de turbines basse-pression et de compresseur basse-pression sont accouplés généralement par un dispositif d'accouplement par engrenage. Dans un tel dispositif, dont un exemple est représenté en figures 1a et 1b, une partie terminant l'arbre du compresseur 10 et une partie terminant l'arbre de la turbine 20 sont engagées co-axialement l'une sur l'autre, les deux arbres 10, 20 s'étendant le long d'un même axe de rotation X-X.

Chacune des parties comporte une pluralité de cannelures 12, 22, les cannelures de l'une engrenant les cannelures de l'autre. Chaque partie présente en outre des zones dites de centrage, respectivement à l'aval 14a, 24a et à l'amont 14b, 24b des cannelures 12, 22, dont les surfaces complémentaires permettent d'assurer le centrage axial des deux arbres l'un par à l'autre.

Les cannelures ont habituellement un profil constant sur toute leur longueur.

Il est souhaitable, dans le domaine des turbomachines, de réduire le diamètre des arbres de rotation et d'augmenter les couples transmis par les dispositifs d'accouplement.

Il en résulte une augmentation du ratio couple à transmettre/rayon primitif des cannelures des arbres et des efforts particulièrement importants sur la partie aval des cannelures, qui est exposée aux plus fortes contraintes, la transmission de mouvement étant, dans le cas d'un accouplement turbine-compresseur, opérée depuis la turbine en aval vers le compresseur en amont par rapport au flux d'air dans la turbomachine.

On a proposé, dans le document FR 2 918 726, un dispositif d'accouplement dans lequel les cannelures de l'un des arbres présentent un profil évolutif.

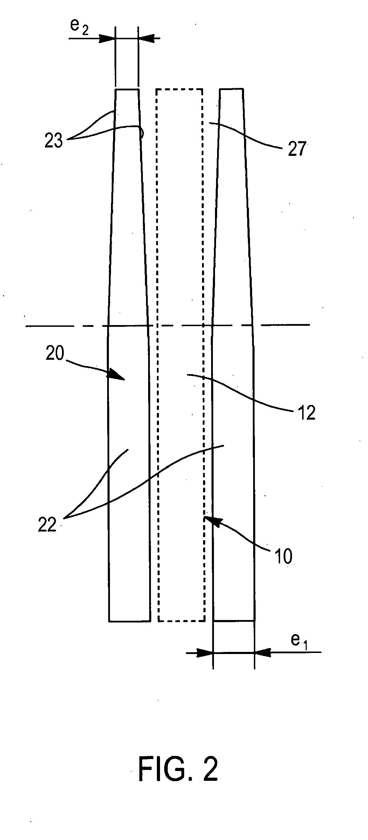

Plus précisément, les cannelures 22 de la partie d'accouplement de l'arbre de turbine basse-pression 20, représentées schématiquement en figure 2, présentent en leur extrémité aval une zone le long de laquelle l'épaisseur e₂ des cannelures est réduite par rapport à l'épaisseur e₁ au reste de la cannelure. L'épaisseur d'une cannelure est mesurée entre les flancs 23 de la cannelure, au niveau de son sommet 26 puisque les flancs 23 des cannelures, présentent un profil, vu en coupe transversale, en développante de cercle, et que l'épaisseur d'une cannelure varie donc en fonction du niveau auquel elle est mesurée.

Les cannelures 12 de l'arbre du compresseur basse-pression 10 sont quant à elles d'épaisseur constante entre leurs flancs, sur toute leur longueur.

De cette manière, à froid, seules les zones des cannelures où l'épaisseur entre les flancs est maximale touchent les cannelures de l'autre arbre. En fonctionnement, l'échauffement et le couple transmis déforment les cannelures, en fermant le jeu initial.

Cette déformation permet une amélioration de la répartition des pressions de contact entre les cannelures pendant le fonctionnement, et donc une diminution des contraintes.

Cette solution génère toutefois deux zones critiques en fonctionnement. La première est située à l'extrémité aval des cannelures de l'arbre de turbine basse-pression, sur les bords libres des flancs des cannelures et à la jonction entre les flancs des cannelures et les fonds des cannelures. Cette zone est une zone d'accumulation de contraintes de traction, de moindre durée de vie par rapport au reste de l'arbre. Par conséquent, l'existence de cette zone implique une diminution de la durée de vie de l'arbre.

De plus, afin d'alléger l'arbre, on a aménagé entre l'extrémité aval de la cannelure et la zone de centrage aval 24a (voir figure 1b) un creusement 25, c'est-à-dire une zone de l'arbre dont l'épaisseur est réduite dans un plan transversal, par rapport à l'épaisseur de l'arbre au niveau du centrage aval.

Ce creusement 25 constitue une deuxième zone critique au niveau de laquelle l'inertie est diminuée, ce qui rend ladite zone plus fragile et diminue sa tenue au cas de chargement extrême, en l'occurrence en cas d'expulsion de l'aube de soufflante en cas de rupture de celle-ci (appelé « Fan Blade Off » en anglais)..

### PRESENTATION DE L'INVENTION

La présente invention a pour but de remédier aux problèmes décrits ci-avant, en élaborant des profils de cannelures qui permettent une bonne transmission du couple et garantissant une tenue au cas de chargement extrême.

A cet effet, l'invention a pour objet un dispositif d'accouplement d'arbres par engrenage, comportant une partie d'accouplement terminant l'un des deux arbres et destinée à être engagée concentriquement dans une partie d'accouplement complémentaire terminant l'autre arbre, ladite partie d'accouplement comportant deux zones de centrage entre lesquelles s'étendent une pluralité de cannelures, dans lequel les cannelures de ladite partie d'accouplement présentent un profil :
- qui est constant le long d'une zone médiane de la partie d'accouplement et
- qui, dans une première zone dans le prolongement de ladite zone médiane, présente une épaisseur, entre les flancs d'une cannelure, qui est réduite par rapport à celle de la même cannelure dans la zone médiane,
et dans lequel les cannelures de ladite partie d'accouplement se prolongent, au-delà de la première zone où elles ont une épaisseur réduite, jusqu'à la zone de centrage qui est du même côté que ladite première zone par rapport à la zone médiane, lesdites cannelures, ainsi que les fonds de cannelures, présentant, dans la zone de raccordement entre ladite zone de centrage et ladite première zone où elles ont une épaisseur réduite, un profil raccordant de façon continue lesdites cannelures et les fond des cannelures à la surface de ladite zone de centrage.

Avantageusement, mais facultativement, l'invention peut en outre comprendre au moins l'une des caractéristiques suivantes :
- les cannelures présentent, dans la zone de raccordement, un profil qui s'épaissit de la zone où elles ont une épaisseur réduite vers la zone de centrage.
- dans la zone de raccordement, la profondeur du fond des cannelures diminue progressivement jusqu'à la surface de la zone de centrage.
- le fond des cannelures présente, dans la zone de raccordement, un profil curviligne.
- les cannelures de ladite partie d'accouplement se prolongent également, du côté opposé à la première zone, par une seconde zone dans laquelle elles présentent un profil d'épaisseur réduite.
- la longueur de la zone médiane est comprise entre 0 et 80% de la longueur totale de la cannelure.
- la zone intermédiaire s'étend sur une longueur comprise entre 0 et 25% de la longueur totale de la cannelure et l'épaisseur de la cannelure le long de cette zone diminue de 0 à 25% de l'épaisseur maximale de la cannelure.
- la zone de raccordement s'étend sur une longueur comprise entre 10 et 40% de la longueur totale de la cannelure.
- la zone d'extrémité de la cannelure s'étend sur une longueur comprise entre 0 et 25% de la longueur totale de la cannelure, et l'épaisseur de la cannelure diminue de 0 à 15% de l'épaisseur maximale de la cannelure.
- les cannelures de la partie d'accouplement de l'autre arbre sont de profil constant.

L'invention a également pour objet un arbre de rotation comportant une partie d'accouplement à un autre arbre, destinée à être engagée concentriquement dans une partie d'accouplement complémentaire terminant l'autre arbre, ladite partie d'accouplement comportant deux zones de centrage entre lesquelles s'étendent une pluralité de cannelures, dans lequel les cannelures de ladite partie d'accouplement présentent un profil :
- qui est constant le long d'une zone médiane de la partie d'accouplement et
- qui, dans une première zone dans le prolongement de ladite zone médiane, présente une épaisseur, entre les flancs d'une cannelure, qui est réduite par rapport à celle de la même cannelure dans la zone médiane,
et dans lequel les cannelures de ladite partie d'accouplement se prolongent, au-delà de la première zone où elles ont une épaisseur réduite, jusqu'à la zone de centrage qui est du même côté que ladite première zone par rapport à la zone médiane, lesdites cannelures, ainsi que les fonds des cannelures, présentant, dans la zone de raccordement entre ladite zone de centrage et ladite première zone où elles ont une épaisseur réduite, un profil raccordant de façon continue lesdites cannelures et le fond des cannelures à la surface de ladite zone de centrage.

L'invention a encore pour objet une turbomachine comprenant un compresseur dont l'arbre est entrainé en rotation par un arbre de turbine, dans laquelle l'arbre du compresseur et l'arbre de turbine sont accouplés par un dispositif selon l'invention, la partie d'accouplement présentant une première zone d'épaisseur réduite et une zone de raccordement étant celle de l'arbre de la turbine, ladite première zone et la zone de raccordement étant situées en aval de la zone médiane par rapport au sens du flux d'air dans la turbomachine.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- Les figures 1a et 1b, déjà décrites, sont des représentations schématiques d'un dispositif d'accouplement d'arbres de l'art antérieur, vu respectivement en perspective éclatée et en coupe longitudinale.
- La figure 2, déjà décrite représente les cannelures d'un arbre de turbine basse-pression de l'art antérieur.
- La figure 3 représente schématiquement, en coupe longitudinale, une turbomachine dans laquelle est installé un dispositif d'accouplement.
- La figure 4 représente schématiquement, en coupe longitudinale, un dispositif d'accouplement d'arbres selon l'invention.
- Les figures 5a et 5b représentent les cannelures d'un arbre d'un dispositif d'accouplement, respectivement en perspective et en vue de dessus.

### DESCRIPTION DETAILLEE D'AU MOINS UN MODE DE REALISATION

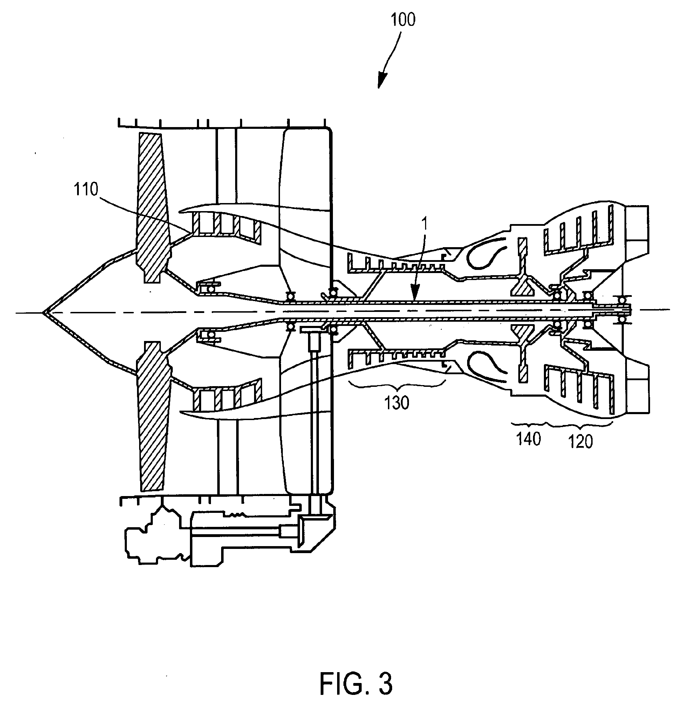

On a représenté en figure 3 une turbomachine 100 comprenant un dispositif 1 d'accouplement selon l'invention. La turbomachine 100 comprend classiquement en amont, par rapport au flux d'air dans la turbomachine, un compresseur basse pression 110, et un compresseur haute pression 130, et en aval, une turbine basse pression 120 et une turbine haute pression 140.

Les gaz d'échappement en sortie du compresseur haute pression 130 entraînent en rotation les turbines 120, 140. Le dispositif d'accouplement 1 permet à la turbine basse pression 120 d'entraîner en rotation le compresseur 110, la transmission du couple étant réalisée par un engrenage.

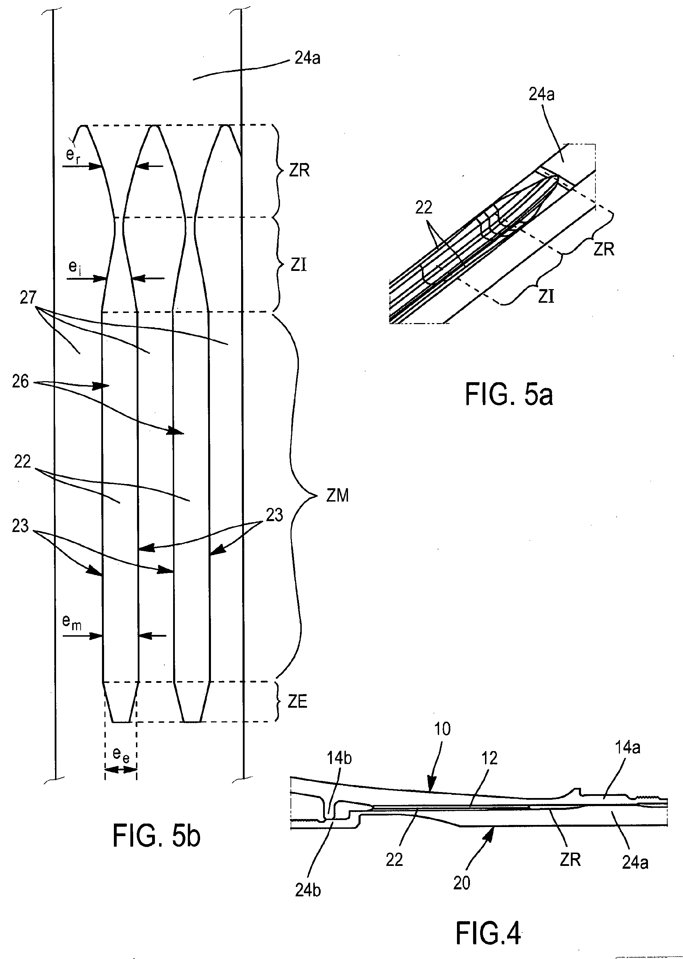

On a représenté en figure 4 un dispositif 1 d'accouplement de deux arbres 10, 20, par exemple respectivement d'un arbre 10 de compresseur basse-pression (110), entrainé en rotation par un arbre 20 de turbine basse-pression (120) de turbomachine (100).

Les arbres 10, 20 présentent chacun une partie d'accouplement destinée à être engagée concentriquement dans une partie d'accouplement complémentaire terminant l'autre arbre. Les arbres, dont leurs parties d'accouplement, sont disposés concentriquement autour d'un axe de rotation X-X.

Le premier arbre, en l'occurrence l'arbre 10 du compresseur, présente sur sa surface intérieure une pluralité de cannelures 12. Le second arbre, en l'occurrence l'arbre 20 de la turbine, présente sur une surface extérieure une pluralité de cannelures 22, adaptées pour engrener les cannelures 12 du premier arbre 10.

Sur chaque arbre 10, 20, les cannelures 12, 22 s'étendent entre deux zones de centrage, une zone de centrage aval 14a, 24a, et une zone de centrage amont 14b, 24b.

Les zones de centrage amont et aval des arbres sont complémentaires, et permettent de positionner correctement l'arbre de compresseur 10 par rapport à l'arbre de turbine 20.

Par exemple, les zones de centrage amont prennent la forme d'une excroissance circonférentielle et d'une rainure circonférentielle correspondante.

Les zones de centrage aval de chaque arbre, quant à elles, présentent chacune une surface cylindrique d'axe parallèle à l'axe de rotation X-X, et surélevée par rapport au reste de l'arbre, notamment par rapport au fond des cannelures.

En référence aux figures 5a et 5b, on a représenté des cannelures d'un arbre du dispositif d'accouplement 1, de préférence de l'arbre 20 de turbine basse-pression.

Chaque cannelure 12, 22, présente deux flancs latéraux 13, 23, et un sommet 16, 26, reliant les flancs. Entre deux cannelures successives d'un même arbre, un fond de cannelure 17, 27 est occupé par une cannelure de l'autre arbre pour permettre l'engrenage.

De préférence, les cannelures 12 du premier arbre présentent une épaisseur e entre les flancs sensiblement constante sur toute la longueur de la cannelure. Comme précédemment l'épaisseur d'une cannelure 12, 22 est mesurée au niveau du sommet 16, 26 de la cannelure.

Par ailleurs, chaque cannelure 22 du second arbre 20 présente un profil évolutif.

En référence à la figure 5b, chaque cannelure présente :
- Une zone médiane ZM, le long de laquelle la cannelure présente une épaisseur eₘ constante entre ses flancs.
- Une première zone, dite zone intermédiaire ZI, dans le prolongement de la zone médiane ZM, et située en aval de celle-ci dans le cas d'une turbomachine, le long de laquelle l'épaisseur eᵢ de la cannelure est réduite par rapport à l'épaisseur eₘ de la cannelure dans la zone médiane. De préférence, cette épaisseur eᵢ est décroissante en partant de la zone médiane ZM vers la zone de centrage aval.
- Une zone dite de raccordement ZR, dans le prolongement de la zone intermédiaire ZI, du même côté que la zone intermédiaire ZI par rapport à la zone médiane (en l'occurrence en aval de la zone intermédiaire ZI dans le cas d'une turbomachine), et formant une extrémité aval de la cannelure 22.

La zone de raccordement ZR relie la zone intermédiaire ZI à la zone de centrage aval 24a de l'arbre 20. Pour ce faire, la cannelure présente, sur cette zone, une épaisseur eᵣ entre ses flancs 23 qui augmente depuis la zone intermédiaire ZI à la zone de centrage 24a, jusqu'à ce que les sommets 26 de deux cannelures successives de l'arbre et la surface de la zone de centrage 24a se rejoignent et forment une surface continue.

De la sorte, les cannelures présentent, au niveau de la zone de raccordement un profil raccordant de façon continue lesdites cannelures et le fond des cannelures 27 à la surface de ladite zone de centrage 24a.

Ainsi, les extrémités aval des cannelures 22 sont confondues entre elles, et confondues avec la zone de centrage aval 24a. De cette manière, les flancs 23 des cannelures 22 ne présentent pas de bords libres en aval où les contraintes seraient accumulées. Les cannelures proposées présentent donc une durée de vie augmentée par rapport aux cannelures de dispositifs d'accouplement de l'art antérieur.

Par ailleurs, les creusements 25 adjacents aux extrémités aval des cannelures de l'art antérieur sont remplacés par les zones de raccordement ZR qui prolongent les cannelures 22 jusqu'à la zone de centrage 24a. Il n'y a donc pas de zone de moindre inertie sur l'arbre 20 de la turbine. Celui-ci est donc renforcé, et sa durée de vie est améliorée.

En outre, comme visible plus particulièrement en figure 5a, le fond de cannelure 27 présente, au niveau de la zone de raccordement ZR une épaisseur décroissante, depuis la profondeur maximale au niveau de la zone intermédiaire à une profondeur nulle au niveau de la zone de centrage 24a.

Le fond de cannelure 27 présente de préférence un profil, vu en coupe longitudinale, curviligne, avantageusement dont le rayon de courbure est continu.

Ainsi, la surface formée par le fond de cannelure 27 et par les flancs 23 adjacents ne présente pas de discontinuité susceptible de générer une accumulation des contraintes.

De retour à la figure 5b, les cannelures 22 peuvent aussi présenter une zone d'extrémité amont ZE, adjacente à la zone médiane ZM et prolongeant celle-ci vers l'amont. Dans cette zone, chaque cannelure 22 présente une épaisseur eₑ réduite par rapport à l'épaisseur eₘ dans la zone médiane.

Les proportions relatives des différentes zones des cannelures 22 sont les suivantes :
- La zone d'extrémité amont ZE présente une longueur comprise entre 0 et 25% de la longueur totale de la cannelure. L'épaisseur eₑ de la cannelure à son extrémité amont - et donc à l'extrémité de la zone - est réduite de 0 à 15% de l'épaisseur maximale de la cannelure, cette épaisseur maximale étant l'épaisseur eₘ au niveau de la zone médiane ZM.
- La zone médiane ZM présente une longueur comprise entre 0 et 80% de la longueur totale de la cannelure. L'épaisseur eₘ de la cannelure est constante, et égale à sa valeur maximale, qui est définie dans la norme ANSI B92-1-1996 et dépend de la turbomachine.

- La zone intermédiaire ZI présente une longueur comprise entre 0 et 80° de la longueur totale de la cannelure. Le long de cette zone, l'épaisseur eᵢ de la cannelure diminue de 0 à 25% par rapport à son épaisseur maximale. De préférence, l'épaisseur eᵢ de la cannelure est minimale à l'extrémité aval de cette zone, au niveau de la jonction avec la zone de raccordement ZR.
- Enfin, la zone de raccordement ZR présente une longueur comprise entre 10 et 40% de la longueur totale de la cannelure. L'épaisseur eᵣ de la cannelure augmente jusqu'à ce que les flancs de deux cannelures consécutives se rejoignent.

Selon un mode de réalisation particulier du dispositif d'accouplement, la zone médiane peut présenter une longueur de 60 mm, la zone intermédiaire une longueur de 25 mm, et la zone de raccordement une longueur de 30 mm. Dans ce mode de réalisation, les cannelures 22 ne présentent pas de zone d'extrémité amont ZE, i.e. les extrémités amont des cannelures correspondent aux extrémités amont des zones médianes ZM.

On a ainsi proposé un dispositif d'accouplement d'arbres dont la géométrie permet de transmettre un couple plus important, et assure une durée de vie améliorée par rapport à l'art antérieur.

Ce dispositif est adapté, sans pour autant être limité à une installation dans les turbomachines.

## Revendications

1. Dispositif (1) d'accouplement de deux arbres par engrenage, comportant une première partie d'accouplement terminant l'un des deux arbres (20) et destinée à être engagée concentriquement dans une deuxième partie d'accouplement complémentaire terminant l'autre arbre (10), ladite première partie d'accouplement comportant deux zones de centrage (24a, 24b) entre lesquelles s'étendent une pluralité de cannelures (22),
dans lequel les cannelures (22) de ladite première partie d'accouplement présentent un profil :
- qui est constant le long d'une zone médiane (ZM) de la partie d'accouplement et
- qui, dans une première zone (ZI) dans le prolongement de ladite zone médiane (ZM), présente une épaisseur (eᵢ), entre les flancs (23) d'une cannelure (22), qui est réduite par rapport à celle (eₘ) de la même cannelure (22) dans la zone médiane (ZM),
**caractérisé en ce que** les cannelures (22) de ladite première partie d'accouplement se prolongent, au-delà de la première zone (ZI) où elles ont une épaisseur (eᵢ) réduite, jusqu'à la zone de centrage (24a) qui est du même côté que ladite première zone (ZI) par rapport à la zone médiane (ZM),
lesdites cannelures (22), ainsi que les fonds des cannelures (27), présentant, dans la zone de raccordement (ZR) entre ladite zone de centrage (24a) et ladite première zone (ZI) où elles ont une épaisseur (eᵢ) réduite, un profil raccordant de façon continue lesdites cannelures (22) et les fonds des cannelures (27) à la surface de ladite zone de centrage (24a).

2. Dispositif (1) selon la revendication 1, dans laquelle les cannelures (22) présentent, dans la zone de raccordement (ZR), un profil qui s'épaissit de la zone (ZI) où elles ont une épaisseur réduite (eᵢ) vers la zone de centrage (24a).

3. Dispositif (1) selon l'une des revendications 1 ou 2, dans lequel, dans la zone de raccordement (ZR), la profondeur du fond des cannelures (27) diminue progressivement jusqu'à la surface de la zone de centrage (24a).

4. Dispositif (1) selon la revendication précédente, dans lequel le fond des cannelures (27) présente, dans la zone de raccordement (ZR), un profil curviligne.

5. Dispositif (1) selon l'une des revendications précédentes, dans lequel les cannelures (22) de ladite partie d'accouplement se prolongent également, du côté opposé à la première zone (ZI), par une seconde zone (ZE) dans laquelle elles présentent un profil d'épaisseur (eₑ) réduite.

6. Dispositif (1) selon l'une des revendications précédentes, dans lequel la longueur de la zone médiane (ZM) est comprise entre 0 et 80% de la longueur totale de la cannelure (22).

7. Dispositif (1) selon l'une des revendications précédentes, dans lequel la première zone (ZI) s'étend sur une longueur comprise entre 0 et 25% de la longueur totale de la cannelure (22) et l'épaisseur de la cannelure (22) le long de cette zone (ZI) est réduite de 0 à 25% de l'épaisseur maximale (eₘ) de la cannelure (22).

8. Dispositif (1) selon l'une des revendications précédentes, dans lequel la zone de raccordement (ZR) s'étend sur une longueur comprise entre 10 et 40% de la longueur totale de la cannelure (22).

9. Dispositif (1) selon l'une des revendications précédentes, dans lequel la deuxième zone (ZE) où les cannelures (22) ont une épaisseur (eₑ) réduite s'étend sur une longueur comprise entre 0 et 25% de la longueur totale de la cannelure (22), et l'épaisseur (eₑ) de la cannelure est réduite de 0 à 15% par rapport à l'épaisseur maximale (eₘ) de la cannelure.

10. Dispositif (1) selon l'une des revendications précédentes, dans lequel les cannelures (12) de la partie d'accouplement de l'autre arbre (10) sont de profil constant.

11. Arbre de rotation (20) comportant une première partie d'accouplement à un autre arbre (10), destinée à être engagée concentriquement dans une deuxième partie d'accouplement complémentaire terminant l'autre arbre (10), ladite première partie d'accouplement comportant deux zones de centrage (24a, 24b) entre lesquelles s'étendent une pluralité de cannelures (22),
dans lequel les cannelures (22) de ladite première partie d'accouplement présentent un profil :
- qui est constant le long d'une zone médiane (ZM) de la partie d'accouplement, et
- qui, dans une première zone (ZI) dans le prolongement de ladite zone médiane (ZM), présente une épaisseur (eᵢ), entre les flancs (23) d'une cannelure (22), qui est réduite par rapport à celle de la même cannelure (22) dans la zone médiane (ZM),
**caractérisé en ce que** les cannelures (22) de ladite première partie d'accouplement se prolongent, au-delà de la première zone (ZI) où elles ont une épaisseur où elles ont une épaisseur (eᵢ) réduite, jusqu'à la zone de centrage (24a) qui est du même côté que ladite première zone (ZI) par rapport à la zone médiane (ZM),
lesdites cannelures (22), ainsi que les fonds des cannelures (27), présentant, dans la zone de raccordement (ZR) entre ladite zone de centrage (24a) et ladite première zone (ZI) où elles ont une épaisseur où elles ont une épaisseur (eᵢ) réduite, un profil raccordant de façon continue lesdites cannelures (22) et le fond des cannelures (27) à la surface de ladite zone de centrage (24a).

12. Turbomachine (100) comprenant un compresseur (110) dont l'arbre (10) est entrainé en rotation par un arbre (20) de turbine (120), **caractérisé en ce que** l'arbre (10) du compresseur (110) et l'arbre (20) de turbine (120) sont accouplés par un dispositif selon la revendication 10, la première partie d'accouplement présentant une première zone (ZI) d'épaisseur où elles ont une épaisseur (eᵢ) réduite et une zone de raccordement (ZR) étant celle de l'arbre de la turbine, ladite première zone (ZI) et la zone de raccordement (ZR) étant situées en aval de la zone médiane (ZM) par rapport au sens du flux d'air dans la turbomachine (100).

## Patentansprüche

1. Kopplungsvorrichtung (1) von zwei Wellen durch Ineinandergreifen, umfassend einen ersten Kopplungsabschnitt am Ende einer der zwei Wellen (20), der bestimmt ist, konzentrisch in einen zweiten komplementären Kopplungsabschnitt am Ende der anderen Welle (10) einzugreifen, wobei der ersten Kopplungsabschnitt zwei Zentrierzonen (24a, 24b) aufweist, zwischen denen sich eine Vielzahl von Riffelungen (22) erstreckt,
wobei die Riffel (22) des ersten Kopplungsabschnitts ein Profil aufweisen:
- das entlang einer mittleren Zone (ZM) des Kopplungsabschnitts konstant ist, und
- das in einer ersten Zone (ZI) in der Verlängerung der mittleren Zone (ZM) eine Dicke (eᵢ) zwischen den Flanken (23) einer Riffelung (22) aufweist, die im Verhältnis zu derjenigen (eₘ) derselben Riffelung (22) in der mittleren Zone (ZM) reduziert ist,
**dadurch gekennzeichnet, dass** sich die Riffelungen (22) des ersten Kopplungsabschnitts jenseits der ersten Zone (ZI), wo sie eine reduzierte Dicke (eᵢ) haben, bis zur Zentrierzone (24a) verlängern, die im Verhältnis zur mittleren Zone (ZM) auf derselben Seite wie die erste Zone (ZI) ist,
wobei die Riffelungen (22) sowie die Böden der Riffelungen (27) in der Verbindungszone (ZR) zwischen der Zentrierzone (24a) und der ersten Zone (ZI), wo sie eine reduzierte Dicke (eᵢ) haben, ein Profil aufweisen, das die Riffelungen (22) und die Böden der Riffelungen (27) auf der Oberfläche der Zentrierzone (24a) kontinuierlich verbindet.

2. Vorrichtung (1) nach Anspruch 1, wobei die Riffelungen (22) in der Verbindungszone (ZR) ein Profil aufweisen, das sich von der Zone (ZI), wo sie eine reduzierte Dicke (eᵢ) haben, in Richtung der Zentrierzone (24a) verdickt.

3. Vorrichtung (1) nach einem der Ansprüche 1 oder 2, wobei in der Verbindungszone (ZR) die Tiefe des Bodens der Riffelungen (27) nach und nach bis zur Oberfläche der Zentrierzone (24a) abnimmt.

4. Vorrichtung (1) nach vorangehendem Anspruch, wobei der Boden der Riffelungen (27) in der Verbindungszone (ZR) ein gekrümmtes Profil aufweist.

5. Vorrichtung (1) nach einem der vorangehenden Ansprüche, wobei sich die Riffelungen (22) des Kopplungsabschnitts ebenfalls von der Seite, die der ersten Zone (ZI) gegenüberliegt, anhand einer zweiten Zone (ZE) verlängern, wobei sie ein Profil reduzierter Dicke (eₑ) aufweisen.

6. Vorrichtung (1) nach einem der vorangehenden Ansprüche, wobei die Länge der mittleren Zone (ZM) zwischen 0 und 80 % inklusive der Gesamtlänge der Riffelung (22) ist.

7. Vorrichtung (1) nach einem der vorangehenden Ansprüche, wobei sich die erste Zone (ZI) über eine Länge zwischen 0 und 25 % inklusive der Gesamtlänge der Riffelung (22) erstreckt, und die Dicke der Riffelung (22) entlang dieser Zone (ZI) von 0 bis 25 % der maximalen Dicke (eₘ) der Riffelung (22) reduziert ist.

8. Vorrichtung (1) nach einem der vorangehenden Ansprüche, wobei sich die Verbindungszone (ZR) über eine Länge zwischen 10 und 40 % inklusive der Gesamtlänge der Riffelung (22) erstreckt.

9. Vorrichtung (1) nach einem der vorangehenden Ansprüche, wobei sich die zweite Zone (ZE), wo die Riffelungen (22) eine reduzierte Dicke (eₑ) haben, über eine Länge zwischen 0 und 25 % inklusive der Gesamtlänge der Riffelung (22) erstreckt, und die Dicke (eₑ) der Riffelung von 0 bis 15 % im Verhältnis zur maximalen Dicke (eₘ) der Riffelung reduziert ist.

10. Vorrichtung (1) nach einem der vorangehenden Ansprüche, wobei die Riffelungen (12) des Kopplungsabschnitts der anderen Welle (10) ein konstantes Profil haben.

11. Rotationswelle (20), aufweisend einen Kopplungsabschnitt mit einer anderen Welle (10), der bestimmt ist, konzentrisch in einen zweiten komplementären Kopplungsabschnitt am Ende der anderen Welle (10) einzugreifen, wobei der ersten Kopplungsabschnitt zwei Zentrierzonen (24a, 24b) aufweist, zwischen denen sich eine Vielzahl von Riffelungen (22) erstreckt,
wobei die Riffel (22) des ersten Kopplungsabschnitts ein Profil aufweisen:
- das entlang einer mittleren Zone (ZM) des Kopplungsabschnitts konstant ist, und
- das in einer ersten Zone (ZI) in der Verlängerung der mittleren Zone (ZM) eine Dicke (eᵢ) zwischen den Flanken (23) einer Riffelung (22) aufweist, die im Verhältnis zu derjenigen derselben Riffelung (22) in der mittleren Zone (ZM) reduziert ist,
**dadurch gekennzeichnet, dass** sich die Riffelungen (22) des ersten Kopplungsabschnitts jenseits der ersten Zone (ZI), wo sie eine reduzierte Dicke (eᵢ) haben, bis zur Zentrierzone (24a) verlängern, die im Verhältnis zur mittleren Zone (ZM) auf derselben Seite wie die erste Zone (ZI) ist,
wobei die Riffelungen (22) sowie die Böden der Riffelungen (27) in der Verbindungszone (ZR) zwischen der Zentrierzone (24a) und der ersten Zone (ZI), wo sie eine reduzierte Dicke (eᵢ) haben, ein Profil aufweisen, das die Riffelungen (22) und den Boden der Riffelungen (27) auf der Oberfläche der Zentrierzone (24a) kontinuierlich verbindet.

12. Turbotriebwerk (100), das einen Kompressor (110) umfasst, dessen Welle (10) von einer Welle (20) einer Turbine (120) rotierend angetrieben wird, **dadurch gekennzeichnet, dass** die Welle (10) des Kompressors (110) und die Welle (20) der Turbine (120) von einer Vorrichtung nach Anspruch 10 gekoppelt sind, wobei der erste Kopplungsabschnitt eine erste Dickenzone (ZI) aufweist, wo sie eine reduzierte Dicke (eᵢ) haben, und eine Verbindungszone (ZR) die der Welle der Turbine ist, wobei sich die erste Zone (ZI) und die Verbindungszone (ZR) im Verhältnis zur Richtung des Luftstroms im Turbotriebwerk (100) nachgelagert zur mittleren Zone (ZM) befinden.

## Claims

1. Device (1) for coupling two shafts by means of a gear mechanism, comprising a first coupling part ending one of the two shafts (20) and intended to be fitted concentrically into a second complementary coupling part ending the other shaft (10), said first coupling part comprising two centring zones (24a, 24b) between which a plurality of splines (22) extend,
wherein the splines (22) of said first coupling part have a profile:
- which is constant along a median zone (ZM) of the coupling part and
- which, in a first zone (ZI) running in the continuation of said median zone (ZM), has a smaller thickness (eᵢ), between the flanks (23) of a spline (22), by comparison with that (eₘ) of the same spline (22) in the median zone (ZM),
**characterised in that** the splines (22) of said first coupling part continue, beyond the first zone (ZI) wherein they have a smaller thickness (eᵢ), as far as the centring zone (24a) which is on the same side as said first zone (ZI) in relation to the median zone (ZM),
said splines (22), and the spline bottoms (27), having, in the coupling zone (ZR) between said centring zone (24a) and said first zone (ZI) where they have a smaller thickness (eᵢ), a profile that continuously couples said splines (22) and the spline bottoms (27) to the surface of said centring zone (24a).

2. Device (1) according to claim 1, wherein the splines (22) have, in the coupling zone (ZR), a profile that increases in thickness from the zone (ZI) where they have a smaller thickness (eᵢ) towards the centring zone (24a).

3. Device (1) according to any of claims 1 or 2, wherein, in the coupling zone (ZR), the spline bottom (27) depth decreases progressively as far as the surface of the centring zone (24a).

4. Device (1) according to the above claim, wherein the bottom of the splines (27) has, in the coupling zone (ZR), a curved profile.

5. Device (1) according to any of the above claims, wherein the splines (22) of said coupling part also continue, on the side opposite the first zone (ZI), with a second zone (ZE) wherein they have a profile of smaller thickness (eₑ).

6. Device (1) according to any of the above claims, wherein the length of the median zone (ZM) is between 0 and 80% of the total length of the spline (22).

7. Device (1) according to any of the above claims, wherein the first zone (ZI) runs along a length between 0 and 25% of the total length of the spline (22) and the thickness of the spline (22) along this zone (ZI) decreases by 0 to 25% of the maximum thickness (eₘ) of the spline (22).

8. Device (1) according to any of the above claims, wherein the coupling zone (ZR) runs along a length between 10 and 40% of the total length of the spline (22).

9. Device (1) according to any of the above claims, wherein the second zone (ZE) where the splines (22) have a smaller thickness (eₑ) runs along a length between 0 and 25% of the total length of the spline (22), and the thickness (eₑ) of the spline decreases by 0 to 15% of the maximum thickness (eₘ) of the spline.

10. Device (1) according to any of the above claims, wherein the splines (12) of the coupling part of the other spline (10) have a constant profile.

11. Rotary shaft (20) comprising a first part for coupling with another shaft (10), intended to be fitted concentrically into a second complementary coupling part ending the other shaft (10), said first coupling part comprising two centring zones (24a, 24b) between which a plurality of splines (22) extend,
wherein the splines (22) of said first coupling part have a profile:
- which is constant along a median zone (ZM) of the coupling part, and
- which, in a first zone (ZI) running in the continuation of said median zone (ZM), has a smaller thickness (eᵢ), between the flanks (23) of a spline (22), by comparison with that of the same spline (22) in the median zone (ZM),
**characterised in that** the splines (22) of said first coupling part continue, beyond the first zone (ZI) wherein they have a smaller thickness (eᵢ), as far as the centring zone (24a) which is on the same side as said first zone (ZI) in relation to the median zone (ZM),
said splines (22), and the spline bottoms (27), having, in the coupling zone (ZR) between said centring zone (24a) and said first zone (ZI) where they have a smaller thickness (eᵢ), a profile that continuously couples said splines (22) and the spline bottoms (27) to the surface of said centring zone (24a).

12. Turbine engine (100) comprising a compressor (110) which shaft (10) is rotated by a turbine (120) shaft (20), **characterised in that** the compressor (110) shaft (10) and the turbine (120) shaft (20) are coupled by a device according to claim 10, the first coupling part having a first thickness zone (ZI) wherein they have a smaller thickness (eᵢ) and a coupling zone (ZR) being that of the turbine shaft, said first zone (ZI) and the coupling zone (ZR) being situated downstream from the median zone (ZM) in relation to the direction of the air flow in the turbine engine (100).
